# EUROPÄISCHE PATENTSCHRIFT

(11) **EP 2 688 391 B1**
(45) Veröffentlichungstag und Bekanntmachung des Hinweises auf die Patenterteilung: **13.04.2016**
(21) Anmeldenummer: 12702438.8
(22) Anmeldetag: 03.02.2012
(51) Int. Cl.: A01G 9/02, A01G 9/10

(54) **ANZUCHTBEHÄLTER FÜR PFLANZEN UND ANZUCHTPLATTE MIT MEHREREN SOLCHER ANZUCHTBEHÄLTER**
PROPAGATION CONTAINER FOR PLANTS AND PROPAGATION PLATE HAVING SEVERAL SUCH PROPAGATION CONTAINERS
CONTENEUR DE CULTURE POUR PLANTES ET PLAQUE DE CULTURE AYANT PLUSIEURS DE CES CONTENEURS DE CULTURE

(30) Priorität: 25.03.2011 DE 102011015124
(43) Veröffentlichungstag der Anmeldung: 29.01.2014
(73) Patentinhaber: Kubern, Juergen, 81545 München (DE)
(72) Erfinder: Kubern, Juergen, 81545 München (DE)
(74) Vertreter: Beyer, Andreas
(86) Internationale Anmeldenummer: PCT/EP2012/000501
(87) Internationale Veröffentlichungsnummer: WO 2012/130354

(56) Entgegenhaltungen:
- EP-A1- 1 593 302
- WO-A1-98/23143
- GB-A- 2 230 413
- US-A1- 2003 233 787
- US-A1- 2005 246 960

## Beschreibung

Die Erfindung betrifft einen Anzuchtbehälter zum Heranziehen von Pflanzen aus insbesondere Samen oder Stecklingen sowie eine Anzuchtplatte, die eine Mehrzahl solcher Anzuchtbehälter aufweist.

Anzuchtbehälter und Anzuchtplatten der genannten Art sind seit langem bekannt, wie, zum Beispiel, in EP 1 593 302 A1. Ein Anzuchtbehälter dient zur Aufnahme eines Substrats, in welches ein Samen oder ein Steckling (gegebenenfalls auch mehrere Samen und mehrere Stecklinge) eingebracht werden, um eine Jungpflanze heranzuziehen. Die Stecklinge können bewurzelt oder unbewurzelt sein.

In jüngerer Zeit haben sogenannte gemischte Töpfe, Container und Ampeln stark an Marktbedeutung gewonnen, d.h. Kulturgefäße für den Endverbraucher, die mit verschiedenen Sorten einer Pflanzenart oder auch mit verschiedenen Pflanzenarten bepflanzt sind. Typischerweise werden diese Produkte durch ein getrenntes Heranziehen und anschließendes Zusammenpflanzen einzelner Jungpflanzen der verschiedenen Sorten oder Arten in einem Kulturgefäß (Topf, Container, Ampel usw.) hergestellt. Die Jungpflanzen werden üblicherweise durch Aussaat oder durch Abstecken eines unbewurzelten Stecklings in einem zur Heranzucht von Jungpflanzen geeigneten Vermehrungstopf kultiviert, der beispielsweise ein Vliestopf (auch als paper pot bezeichnet), ein sogenannter Jiffypot^{®} oder ein sogenannter Preforma^{®}-Topf sein kann. Ein Vliestopf ist ein im Wesentlichen hohlzylindrischer Behälter aus einem vliesartigen Papiermaterial, der das zur Aufzucht der Jungpflanze verwendete Substratmaterial aufnimmt. Ein Jiffypot^{®} besteht aus getrocknetem, gepresstem Torf, der mit einem biologisch abbaubaren Netz umgeben ist. Er quillt bei Zugabe von Wasser auf und bekommt so seine eigentliche Form. Ein Preforma^{®}-Topf ist ein aus dem Substratmaterial, beispielsweise Torf, und einem organischen Klebstoff gepresstes Gebilde, welches unmittelbar den Samen oder Steckling aufnehmen kann. Vliestöpfe, Jiffypot^{®}-Töpfe oder Preforma^{®}-Töpfe haben selbst keine ausreichende Stabilität und müssen daher jeweils in einen Anzuchtbehälter gesteckt werden, der ein sicheres Handling der mit Samen oder Stecklingen versehenen Vliestöpfe, Jiffy-pot^{®}-Töpfe oder Preforma^{®}-Töpfe ermöglicht und es gestattet, dem Substratmaterial das zur Aufzucht notwendige Wasser und gegebenenfalls Nährflüssigkeiten etc. zuzuführen. Eine Anzuchtplatte, auch als tray bezeichnet, enthält eine Vielzahl solcher Anzuchtbehälter (auch Zellen genannt) und ermöglicht ein effizientes Handling aller in den Anzuchtbehältern enthaltener Vermehrungstöpfe.

Zur Herstellung gemischter Töpfe, Container und Ampeln müssen gewünschte, wie zuvor beschrieben aufgezogene unterschiedliche Jungpflanzen in dem zum Verkauf bestimmten Kulturgefäß, z.B. einen Topf, einen Container oder eine Ampel, zusammengepflanzt werden, was üblicherweise durch einen Fertigwareproduzenten geschieht. Das Einpflanzen der gewünschten, unterschiedlichen Jungpflanzen in jeweils einen Topf oder ähnliches stellt ersichtlich einen beträchtlichen logistischen und organisatorischen Aufwand dar. Auch besteht hierbei ein erhebliches Risiko, dass nicht immer die richtigen Jungpflanzen in einen Topf gepflanzt werden.

Alternativ ist es aus der US 7,891,134 B2 bekannt, Stecklinge unterschiedlicher Sorten und/oder Arten in einem einzigen Vermehrungstopf gemeinsam zu bewurzeln. Der wesentliche Vorteil dieses Verfahrens besteht in einer deutlichen Arbeitsersparnis beim Fertigwareproduzenten und in der Vermeidung von Fehlern beim zuvor beschriebenen, späteren Zusammenpflanzen gewünschter Jungpflanzen. Nachteilig ist jedoch, dass nur Stecklinge von Sorten oder Arten gemeinsam bewurzelt werden können, die während der Bewurzelung zumindest annähernd gleiche Kulturansprüche hinsichtlich Temperatur, Wasserzufuhr, Substratmaterial etc. haben und die darüber hinaus gleiche oder jedenfalls ähnliche Wuchseigenschaften aufweisen.

Der Erfindung liegt die Aufgabe zugrunde, eine Lösung anzugeben, die es gestattet, auch unterschiedliche Sorten und/oder Arten auf arbeitssparende Weise zu Jungpflanzen heranzuziehen.

Diese Aufgabe ist erfindungsgemäß mit einem Anzuchtbehälter gelöst, der die im Patentanspruch 1 genannten Merkmale aufweist. Der erfindungsgemäße Anzuchtbehälter hat eine Umfangswand, die wenigstens zwei nebeneinander angeordnete Kavitäten mit je einer Mittellängsachse begrenzt. Die Kavitäten des Anzuchtbehälters sind entlang eines Teils ihrer seitlichen Umfangsfläche zueinander offen und weisen jeweils eine obere Zugangsöffnung und einen Boden auf. Zwischen der oberen Zugangsöffnung und dem Boden jeder Kavität verlaufen mindestens zwei sich im Wesentlichen vertikal erstreckende und in Umfangsrichtung voneinander beabstandete Halterippen, die aus der Umfangswand in die zugehörige Kavität radial vorstehen und eine zylindrische oder kegelstumpfförmige, auf die Mittellängsachse der zugehörigen Kavität zentrierte Aufnahmeöffnung festlegen. Mit "im Wesentlichen vertikal" ist hierbei gemeint, dass die Halterippen sich nicht notwendig exakt in vertikaler Richtung erstrecken müssen. Vielmehr kann es beispielsweise dann, wenn der Anzuchtbehälter durch ein Tiefziehverfahren hergestellt wird, erforderlich sein, dass die Halterippen einen geringen Konuswinkel aufweisen (z.B. 3,5 bis 4 Grad), um ein einwandfreies Entformen zu ermöglichen. Auch muss der Verlauf der Halterippen gegebenenfalls der äußeren Form des verwendeten Vermehrungstopfes angepasst sein. Ist beispielsweise ein Vermehrungstopf kegelstumpfförmig, dann müssen sich die Halterippen zumindest im Wesentlichen parallel zur Außenseite eines solchen Vermehrungstopfes erstrecken und sind deshalb geneigt angeordnet, erstrecken sich aber nach wie vor in einer im Wesentlichen vertikalen Richtung, d.h. bezogen auf die Kavität von oben nach unten. Jede Aufnahmeöffnung ist zur Aufnahme eines Vermehrungstopfes bestimmt, der ein Vliestopf, ein Jiffypot^{®}, ein Preforma^{®}-Topf oder ähnliches sein kann. Der gegenseitige Abstand der Mittellängsachsen der Kavitäten des Anzuchtbehälters ist so bemessen, dass die seitlichen (virtuellen) Umfangsflächen der Aufnahmeöffnungen sich berühren oder überschneiden. Auf diese Weise wird erfindungsgemäß gewährleistet, dass die in die Aufnahmeöffnungen eines erfindungsgemäßen Anzuchtbehälters eingeführten Vermehrungstöpfe sich auf einem Teil ihrer seitlichen Umfangsflächen berühren bzw. gegeneinander gepresst werden. Die sich während der Aufzucht der Jungpflanzen in den Vermehrungstöpfen bildenden Wurzeln haben somit die Möglichkeit, mit den Wurzeln des oder der angrenzenden Vermehrungstöpfe zusammenzuwachsen und einen Cluster aus Vermehrungstöpfen zu bilden, der nach dem Miteinanderverwachsen der Wurzeln als eine Einheit aus dem Anzuchtbehälter genommen und beispielsweise in ein zum Verkauf bestimmtes Gefäß gepflanzt werden kann. Weil erfindungsgemäß jede Jungpflanze ihren eigenen Vermehrungstopf hat, können unterschiedliche Anforderungen der einzelnen Pflanzensorten und/oder -arten ohne Weiteres berücksichtigt werden. So kann beispielsweise jede Jungpflanze in dem für sie optimalen Substrat herangezogen werden. Auch kann jeder Jungpflanze exakt die benötigte Wassermenge zugeführt werden. Des Weiteren können jeder Jungpflanze individuell Wachstumshemmer oder Wachstumsbeschleuniger zugeführt werden, so dass sich die Wachstumsgeschwindigkeit unterschiedlicher in einem Anzuchtbehälter befindlicher Sorten und/oder Arten angleicht. Schließlich können jeder Jungpflanze individuell bestimmte Nährflüssigkeiten, Wachstumshormone, Pflanzenschutzmittel etc. zugeführt werden.

Der gegenseitige seitliche Kontakt der Vermehrungstöpfe wird normalerweise, d.h. bei zylindrischen Vermehrungstöpfen mit runder Außenwand, die Gestalt einer vertikalen Linie oder eines vertikalen Streifens haben, kann aber in Abhängigkeit der äußeren Gestalt der zum Einsatz kommenden Vermehrungstöpfe auch flächig sein, etwa bei im Querschnitt rechteckigen oder quadratischen Vermehrungstöpfen. Auch braucht der gegenseitige Kontakt der Vermehrungstöpfe sich nicht über deren gesamte Höhe zu erstrecken, wichtig ist nur, dass das Ausmaß des gegenseitigen Kontakts dazu ausreicht, dass genügend Wurzeln seitlich aus einem Vermehrungstopf in einen benachbarten Vermehrungstopf wachsen können, um die Vermehrungstöpfe zu einer Einheit zu verbinden. Es versteht sich, dass die in einen erfindungsgemäßen Anzuchtbehälter eingesetzten Vermehrungstöpfe so gestaltet sein müssen, dass ein Herauswachsen des in ihnen gebildeten Wurzelwerks aus der seitlichen Umfangsfläche des Vermehrungstopfes möglich ist.

Die Halterippen eines erfindungsgemäßen Anzuchtbehälters dienen nicht nur zur seitlichen Festlegung einer Aufnahmeöffnung für einen Vermehrungstopf, sondern sie sorgen auch für einen Abstand zwischen der seitlichen Umfangsfläche eines Vermehrungstopfes und der Umfangswand des Anzuchtbehälters. Auf diese Weise kann ein in der Aufnahmeöffnung befindlicher Vermehrungstopf weitestgehend von Luft umspült werden, was für ein gutes Wachstum der Jungpflanze vorteilhaft ist und einer Grauschimmelbildung sowie Wurzelkrankheiten vorbeugt. Die Halterippen dienen darüber hinaus auch dazu, einen in einer Aufnahmeöffnung befindlichen Vermehrungstopf zu stützen und korrekt zu positionieren, insbesondere zu zentrieren. Damit lässt sich sicherstellen, dass sich alle Vermehrungstöpfe in einer bezüglich des jeweiligen Anzuchtbehälters definierten Position befinden, was beispielsweise für eine Automatisierung bestimmter Prozessschritte wie etwa Vorlochen, Säen oder Stecken wichtig ist.

Bei einer Ausführungsform eines erfindungsgemäßen Anzuchtbehälters sind die Mittellängsachsen der einzelnen Kavitäten des Anzuchtbehälters zueinander parallel. Eine solche Ausführungsform bietet sich an, wenn die Vermehrungstöpfe selbst eine zylindrische Gestalt haben, wie etwa die bereits erwähnten Vliestöpfe. Bei einer anderen Ausführungsform sind die Mittellängsachsen der Kavitäten des Anzuchtbehälters so orientiert, dass sie sich in einer vom Boden des Anzuchtbehälters zur oberen Zugangsöffnung verlaufenden Richtung voneinander entfernen. Eine solche Ausführungsform ist beispielsweise für kegelstumpfförmige Preformatöpfe geeignet. Jede Mittellängsachse ist dann gegenüber der Vertikalen um den halben Kegelwinkel nach außen geneigt, so dass die seitlichen Umfangsflächen der in den Aufnahmeöffnungen befindlichen Vermehrungstöpfe in dem Bereich parallel zueinander verlaufen, in dem sie sich berühren.

Grundsätzlich reichen bereits zwei Halterippen pro Kavität dazu aus, die Aufnahmeöffnung dieser Kavität in Umfangsrichtung festzulegen und dafür zu sorgen, dass ein in der Aufnahmeöffnung angeordneter Vermehrungstopf korrekt positioniert ist, insbesondere also mit einem oder mehreren im selben Anzuchtbehälter neben ihm befindlichen Vermehrungstöpfen seitlich in Kontakt steht. Bei einer bevorzugten Ausführungsform des Anzuchtbehälters stehen pro Kavität drei Halterippen aus der Umfangswand radial hervor und sind in Umfangsrichtung vorzugsweise gleichmäßig voneinander beabstandet. Auf diese Weise wird eine noch zuverlässigere und definiertere Positionierung eines Vermehrungstopfes in der Aufnahmeöffnung erreicht.

Es ist nicht erforderlich, dass jede Halterippe sich über die gesamte Höhe einer Kavität erstreckt. Insbesondere bei mehr als zwei Halterippen pro Kavität können die einzelnen Rippen auf unterschiedlichen Höhen innerhalb der Kavität angeordnet sein und auf diese Weise einen in der Aufnahmeöffnung befindlichen Vermehrungstopf gut positionieren. Jedoch ist es nicht von Nachteil, wenn jede Halterippe sich von der oberen Zugangsöffnung bis zum Boden einer Kavität erstreckt. Eine sichere Positionierung eines in der Aufnahmeöffnung befindlichen Vermehrungstopfes wird damit auf jeden Fall erreicht. Wenn der Anzuchtbehälter z.B. aus einer Kunststofffolie im Tiefziehverfahren hergestellt werden soll, sind solche sich vom Boden bis zur oberen Zugangsöffnung erstreckende Halterippen zum einen aus fertigungstechnischen Gründen vorteilhaft (gute Entformungsmöglichkeit), zum anderen verleihen sie dem Anzuchtbehälter auch eine erhöhte Stabilität.

Bei bevorzugten Ausführungsformen des erfindungsgemäßen Anzuchtbehälters ist derjenige Abschnitt jeder Halterippe, der der oberen Zugangsöffnung am nächsten liegt, konisch nach innen abgeschrägt ausgebildet. Auf diese Weise wird das Einführen eines Vermehrungstopfes in die Aufnahmeöffnung und dessen korrekte Positionierung in der Aufnahmeöffnung erleichtert.

Der Boden jeder Kavität eines erfindungsgemäßen Anzuchtbehälters weist vorzugsweise mehrere Absätze auf, deren Oberseiten auf dem gleichen Niveau angeordnet sind und zusammen eine Unterseite der Aufnahmeöffnung festlegen. Mit anderen Worten, ein in die Aufnahmeöffnung eingeführter Vermehrungstopf steht mit seinem Boden auf den Oberseiten der genannten Absätze. Gemäß einer Weiterbildung einer solchen Ausführungsform sind zwischen den Absätzen Kanäle gebildet, die in einer Abflussöffnung im Boden der Kavität münden. Die Kanäle ermöglichen einen Wasserzulauf und/oder Wasserablauf zum Vermehrungstopf bzw. von dem Vermehrungstopf und sorgen zugleich für eine einwandfreie Belüftung des Substratbodens. Vorzugsweise münden alle Kanäle eines Anzuchtbehälters in einer gemeinsamen Abflussöffnung.

Besonders bevorzugte Ausgestaltungen erfindungsgemäßer Anzuchtbehälter umfassen drei, vier oder fünf Kavitäten, d.h. sie sind zur Aufnahme von drei, vier oder fünf Vermehrungstöpfen ausgebildet. Beispielsweise können bei einem Anzuchtbehälter mit drei Kavitäten letztere näherungsweise in der Form eines dreiblättrigen Kleeblatts angeordnet sein, bei vier Kavitäten können diese in Form eines Vierecks angeordnet sein, bei fünf Kavitäten können diese so angeordnet sein, dass eine mittlere Kavität von den übrigen vier Kavitäten umgeben ist usw. Grundsätzlich ist es möglich, mehr als fünf Kavitäten in einem Anzuchtbehälter vorzusehen, denkbar sind beispielsweise auch sechs oder sieben Kavitäten, jedoch wird es mit größer werdender Anzahl von Kavitäten abhängig von deren Anordnung unter Umständen schwieriger, den gewünschten seitlichen Kontakt der Vermehrungstöpfe sicherzustellen.

Die eingangs genannte Aufgabe ist erfindungsgemäß auch gelöst mit einer Anzuchtplatte, die eine Mehrzahl der zuvor beschriebenen Anzuchtbehälter aufweist. Bei einer bevorzugten Ausführungsform einer erfindungsgemäßen Anzuchtplatte weist jeder Anzuchtbehälter drei Kavitäten auf, die zusammen in Draufsicht eine kleeblattartige Form bilden. Die Anzuchtbehälter sind in der Anzuchtplatte mit gleicher Ausrichtung in Zeilenform derart angeordnet, dass sich in Zeilenrichtung jeweils zwei Mittellängsachsen der Kavitäten eines Anzuchtbehälters auf einer gemeinsamen Linie befinden, während die dritte Kavität sich darunter befindet. Auf diese Weise ist die Position jeder Kavität in der Anzuchtplatte genau definiert und ein Einführen und Herausnehmen von Vermehrungstöpfen in die Anzuchtbehälter lässt sich einfach automatisieren, beispielsweise mittels eines Greifroboters. Ein solcher Greifroboter gelangt dann von Kavität zu Kavität, indem er lediglich in Zeilenrichtung verfahren wird und am Ende der Zeile um einen bestimmtes Maß versetzt wird, um die nächsten in Zeilenrichtung angeordneten Kavitäten anfahren zu können. Alternativ sind andere Anordnungen möglich.

Ein bevorzugtes Ausführungsbeispiel eines erfindungsgemäßen Anzuchtbehälters und einer Mehrzahl solcher Anzuchtbehälter, die auf einer Anzuchtplatte zusammengefasst sind, wird im Folgenden anhand der beigefügten, schematischen Figuren näher erläutert. Es zeigt:
- Figur 1: eine Ausführungsform eines erfindungsgemäßen Anzuchtbehälters mit drei Kavitäten in räumlicher Darstellung von schräg oben,
- Figur 2: den Anzuchtbehälter aus Figur 1 in räumlicher Darstellung von schräg unten,
- Figur 3: eine Draufsicht des Anzuchtbehälters aus Figur 1, und
- Figur 4: eine Draufsicht auf eine Anzuchtplatte mit fünfzig Anzuchtbehältern gemäß Figur 1.

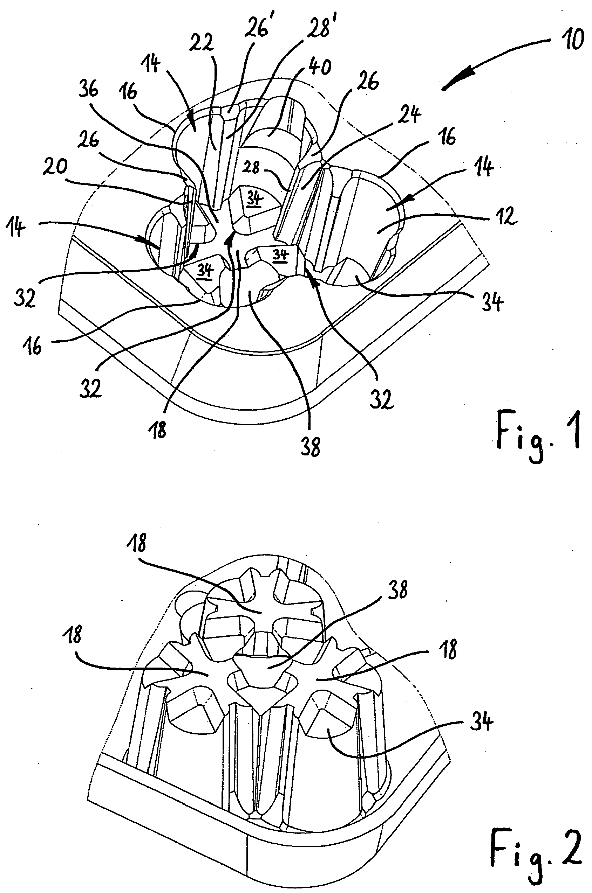

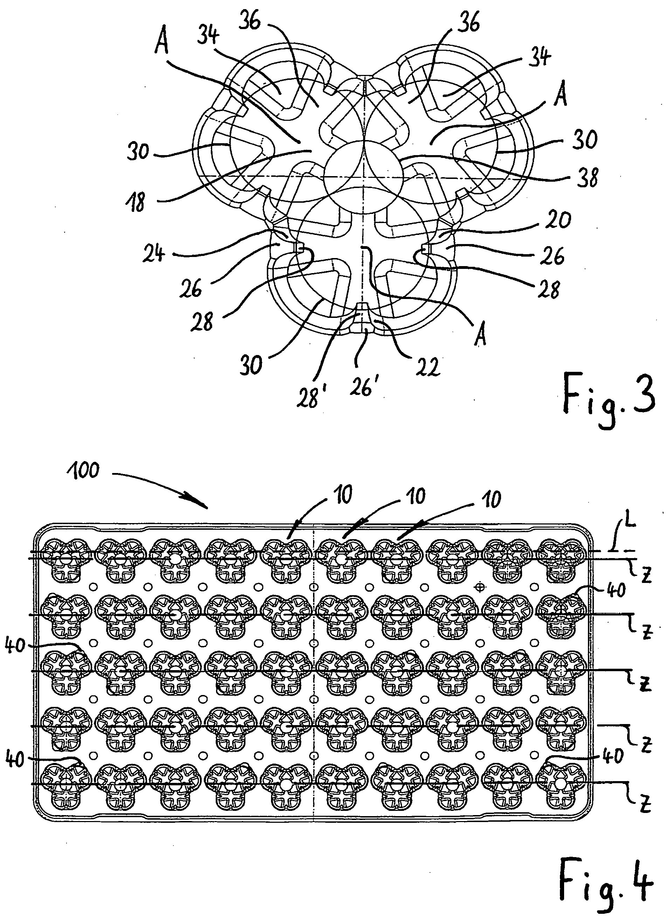

In den Fig. 1 bis 3 ist ein allgemein mit 10 bezeichneter Anzuchtbehälter in verschiedenen Ansichten dargestellt. Der Anzuchtbehälter 10 ist in den Fig. 1 und 2 Bestandteil einer unter Bezugnahme auf Fig. 4 noch näher beschriebenen Anzuchtplatte 100, die insgesamt fünfzig solcher Anzuchtbehälter 10 aufweist, jedoch kann der Anzuchtbehälter 10 ohne Weiteres auch so ausgebildet sein, dass er einzeln für sich handhabbar ist, d.h. nicht Bestandteil einer Anzuchtplatte mit mehreren Anzuchtbehältern ist.

Der Anzuchtbehälter 10 hat eine seitliche Umfangswand 12, die mehrere nebeneinander angeordnete Kavitäten begrenzt, im gezeigten Ausführungsbeispiel drei Kavitäten 14, die wie dargestellt entlang eines Teils ihrer seitlichen Umfangsfläche zueinander offen sind. Jede Kavität 14 hat eine obere Zugangsöffnung 16 und einen Boden 18, der mit dem unteren Ende der Umfangswand 12 verbunden ist. Die drei Zugangsöffnungen 16 bilden zusammen die offene Oberseite des Anzuchtbehälters 10, während die drei Böden 18 zusammen einen Boden und damit die Unterseite des Anzuchtbehälters 10 bilden.

Zwischen der oberen Zugangsöffnung 16 und dem Boden 18 jeder Kavität 14 verlaufen drei sich im Wesentlichen vertikal erstreckende und in Umfangsrichtung voneinander beabstandete Halterippen 20, 22, 24, die aus der Umfangswand 12 in die zugehörige Kavität 14 radial vorstehen. Die beiden Halterippen 20 und 24 jeder Kavität sind in Umfangsrichtung gesehen jeweils am Ende der durch die Umfangswand 12 definierten seitlichen Umfangsfläche jeder Kavität 14 angeordnet und sind identisch ausgebildet. Ein Abschnitt 26 jeder Halterippe 20, 24, der sich an die obere Zugangsöffnung 16 anschließt, ist konisch nach innen abgeschrägt ausgebildet. In radialer Richtung gesehen verjüngt sich jede Halterippe 20, 24 von außen nach innen bis zu einer radial innen befindlichen Stützfläche 28, die dem Innenraum der Kavität 14 zugewandt ist.

Jede Kavität 14 hat eine hier vertikal angeordnete Mittellängsachse A. Die beiden Halterippen 20, 24, genauer deren Stützflächen 28 legen zwischen sich eine hier im Querschnitt kreisförmige, nahezu zylindrische, tatsächlich jedoch leicht kegelstumpfförmige Aufnahmeöffnung 30 fest, die auf die Mittellängsachse A der zugehörigen Kavität 14 zentriert ist. Die geringfügig kegelstumpfförmige Gestalt der Aufnahmeöffnung 30 ergibt sich im gezeigten Ausführungsbeispiel aus einem geringen Konuswinkel von 3,5 bis 4 Grad, den die Halterippen 20, 24 aufweisen, d.h. die Halterippen 20, 24 stehen nahe dem Boden 18 jeder Kavität 14 radial etwas weiter in die Kavität 14 hinein als in ihrem oberen, der Zugangsöffnung 16 benachbarten Bereich. Ein solcher Konuswinkel ist beim gezeigten Ausführungsbeispiel erforderlich, weil der dargestellte Anzuchtbehälter 10 aus einer Kunststofffolie im Tiefziehverfahren einstückig hergestellt wird und aus der Tiefziehform (nicht dargestellt) entformt werden muss. Bei einem anderen Herstellungsverfahren können die Halterippen 20, 24 ohne Weiteres auch eine exakt zylindrische Aufnahmeöffnung festlegen, falls dies gewünscht ist.

Der gegenseitige Abstand der hier vertikalen und damit zueinander parallelen Mittellängsachsen A der Kavitäten 14 ist so bemessen, dass die Aufnahmeöffnungen 30, genauer deren seitliche Umfangsflächen, sich berühren (siehe Fig. 3). Alternativ kann der gegenseitige Abstand der Mittellängsachsen A auch so gewählt sein, dass die seitlichen Umfangsflächen der Aufnahmeöffnungen 30 sich etwas überschneiden (nicht dargestellt). Der Sinn und Zweck einer solchen Ausgestaltung wird weiter unten im Zusammenhang mit der Funktionsbeschreibung des Anzuchtbehälters 10 noch näher erläutert werden.

Die in Umfangsrichtung mit gleichem Abstand von den Halterippen 20, 24 angeordnete weitere Halterippe 22 kann genauso ausgeführt sein wie die Halterippen 20, 24. Im vorliegenden Ausführungsbeispiel jedoch erstreckt sich die mittlere Halterippe 22 radial nicht ganz so weit in die Kavität 14 hinein wie die Halterippen 20, 24, was an der anderen Form ihrer oberen Abschrägung 26' und ihrer breiter ausgebildeten Stützfläche 28' erkennbar ist. Die Stützfläche 28' der Halterippe 22 kommt somit erst etwas weiter unten mit der seitlichen Umfangsfläche der Aufnahmeöffnung 30 in Kontakt.

Auf dem Boden 18 jeder Kavität 14 sind mehrere hier näherungsweise tortenstückförmige Absätze 32 ausgebildet, deren Oberseiten 34 auf ein und demselben Höhenniveau angeordnet sind, so dass sie zusammen eine Unterseite der Aufnahmeöffnung 30 festlegen. Die Oberseiten 34 können in einer gemeinsamen Ebene und damit parallel zueinander angeordnet sein, sie können jedoch - jeweils auf dem gleichen Niveau - auch so angeordnet sein, dass sie in radialer Richtung von außen nach innen leicht abfallend verlaufen.

Zwischen den Absätzen 32 sind durch den Boden 18 und seitliche Flächen der Absätze 32 begrenzte Kanäle 36 gebildet, die im gezeigten Ausführungsbeispiel alle in einer gemeinsamen Abflussöffnung 38 münden. Alternativ kann jede Kavität 14 auch ihre eigene Abflussöffnung haben.

Es wird nun die Funktion des Anzuchtbehälters 10 und seiner zuvor beschriebenen Elemente erläutert. Jede von den Halterippen 20, 22 und 24 festgelegte Aufnahmeöffnung 30, die im gezeigten Ausführungsbeispiel nahezu zylindrisch ist, dient zur Aufnahme eines Vermehrungstopfes zur Aufzucht von Jungpflanzen, dessen Durchmesser dem durch die Halterippen 20 und 24 festgelegten Durchmesser der Aufnahmeöffnung 30 entspricht. Der gezeigte Anzuchtbehälter 10 ist für Vermehrungstöpfe in Gestalt sogenannter Vliestöpfe konstruiert. Wie einleitend bereits beschrieben, ist ein Vliestopf ein aus einem Papiervlies bestehendes, hohlzylindrisches Gebilde mit kreisförmigem Querschnitt, in welches zur Anzucht von Jungpflanzen ein geeignetes Substrat, etwa Erde und/oder Torfmaterial, eingefüllt wird. Drei mit einem gewünschten Substrat befüllte Vliestöpfe werden dann in die drei Aufnahmeöffnungen 30 des Anzuchtbehälters 10 eingeführt. Die Halterippen 20 und 24 jeder Kavität 14 sorgen dabei im Verein mit der Halterippe 22 dafür, dass die seitlichen Umfangsflächen der hier als Vliestöpfe ausgeführten Vermehrungstöpfe sich längs einer vertikalen Linie bzw. längs eines vertikalen Streifens gegenseitig berühren. Wenn der gegenseitige Abstand der Mittellängsachsen A der Kavitäten 14 so gewählt ist, dass die seitlichen Umfangsflächen der Aufnahmeöffnungen 30 sich überschneiden, dann werden die äußeren Umfangsflächen der in den Aufnahmeöffnungen 30 angeordneten Vermehrungstöpfe unter entsprechender Verformung ihrer Umfangsfläche sogar gegeneinandergedrückt.

Unabhängig davon, ob die Umfangsflächen der Vermehrungstöpfe gegeneinandergedrückt werden oder sich lediglich berühren, wird durch den Anzuchtbehälter 10 jedoch gewährleistet, dass sich während der Aufzucht im Substratmaterial entwickelnde Wurzeln, die auch seitlich aus dem Vermehrungstopf herauswachsen, sich mit aus einem benachbarten Vermehrungstopf seitlich herauswachsenden Wurzeln verbinden können bzw. sogar in den seitlich benachbarten Vermehrungstopf hineinwachsen können. Auf diese Weise verwachsen während der Aufzucht die drei in den Aufnahmeöffnungen 30 befindlichen Vermehrungstöpfe zu einer Einheit, die zu einem gewünschten Zeitpunkt aus dem Anzuchtbehälter 10 entnommen und in ein anderes Kulturgefäß gepflanzt werden kann, beispielsweise in eine zum Verkauf bestimmte Ampel.

Die Absätze 32 sorgen in Verbindung mit den zwischen ihnen ausgeführten Kanälen 36 und der Abflussöffnung 38 dafür, dass der untere Bereich eines in einer Aufnahmeöffnung 30 befindlichen Vermehrungstopfes nicht "im Wasser" steht, sondern immer gut belüftet ist. Seitlich ist eine gute Belüftung durch die Halterippen 20, 22, 24 sichergestellt, die mit ihren Stützflächen 28, 28' nur eine geringe Kontaktfläche zum Vermehrungstopf aufweisen und um einen Vermehrungstopf herum einen im Wesentlichen kreisringförmigen Hohlraum zwischen der Umfangsseite des Vermehrungstopfes und der Umfangswand 12 des Anzuchtbehälters 10 frei lassen. Eine Grauschimmelbildung und/oder Faulprozesse werden auf diese Weise wirkungsvoll verhindert.

Es versteht sich, dass die Aufnahmeöffnungen 30 nicht wie hier dargestellt und beschrieben nahezu kreiszylindrisch sein müssen, sondern jede Form haben können, die durch die Gestalt des verwendeten Vermehrungstopfes vorgegeben ist. Werden beispielsweise kegelstumpfförmige Vermehrungstöpfe verwendet, müssen die Mittellängsachsen A der Kavitäten 14 jeweils so nach außen geneigt sein, dass die Umfangsflächen derartiger Vermehrungstöpfe in dem Bereich parallel zueinander verlaufen, in dem sie sich berühren sollen. Ebenso sind dann die Halterippen 20, 22, 24 so auszuführen, dass sie eine auf diese geneigte Mittellängsachse A zentrierte, kegelstumpfförmige Aufnahmeöffnung 30 festlegen.

Aus Gründen einer effizienteren Handhabung werden Anzuchtbehälter 10 in der Regel nicht einzeln hergestellt, sondern sind Bestandteil einer sogenannten Anzuchtplatte. Die Fig. 4 zeigt eine solche Anzuchtplatte 100, in der jeweils fünfzig der zuvor beschriebenen Anzuchtbehälter 10 angeordnet sind, und zwar in fünf Zeilen Z mit jeweils zehn Anzuchtbehältern 10. Damit sich eine solche Anzuchtplatte 100 automatisiert bestücken lässt, sind die Anzuchtbehälter 10 nicht willkürlich auf der Anzuchtplatte 100 verteilt angeordnet, sondern derart, dass die Mittellängsachsen A ihrer Kavitäten 14 jeweils in Zeilenrichtung aufeinander folgen, wobei sich in Zeilenrichtung die zwei Mittellängsachsen A der in Fig. 4 jeweils oberen Kavitäten 14 eines Anzuchtbehälters 10 auf einer gemeinsamen Linie L befinden, während die Mittellängsachsen A der jeweils unteren Kavitäten 14 der Anzuchtbehälter 10 sich ebenfalls auf einer gemeinsamen Linie befinden, die unterhalb und parallel zur Linie L verläuft.

Damit mehrere leere Anzuchtplatten 100 aufeinander gestapelt werden können, ohne sich zu verklemmen, sind in manchen der Anzuchtbehälter 10 Stapelnocken 40 ausgebildet, die beim Aufeinanderstapeln von Anzuchtplatten 100 einen definierten Anschlag bereitstellen und verhindern, dass die aufeinander gestapelten Anzuchtplatten 100 zu weit ineinander rutschen.

## Patentansprüche

1. Anzuchtbehälter (10) mit einer Umfangswand (12), die wenigstens zwei nebeneinander angeordnete Kavitäten (14) mit je einer Mittellängsachse (A) begrenzt, die entlang eines Teils ihrer seitlichen Umfangsfläche zueinander offen sind, wobei **dadurch gekennzeichnet dass**: jede Kavität (14) eine obere Zugangsöffnung (16) und einen Boden (18) aufweist,
- zwischen der oberen Zugangsöffnung (16) und dem Boden (18) jeder Kavität (14) mindestens zwei sich im Wesentlichen vertikal erstreckende und in Umfangsrichtung voneinander beabstandete Halterippen (20, 22, 24) verlaufen, die aus der Umfangswand (12) in die zugehörige Kavität (14) radial vorstehen und eine zylindrische oder kegelstumpfförmige, auf die Mittellängsachse (A) der zugehörigen Kavität (14) zentrierte Aufnahmeöffnung (30) festlegen, und
- der gegenseitige Abstand der Mittellängsachsen (A) so bemessen ist, dass die seitlichen Umfangsflächen der Aufnahmeöffnungen (30) sich berühren oder überschneiden.

2. Anzuchtbehälter nach Anspruch 1,
**dadurch gekennzeichnet, dass** die Mittellängsachsen (A) der Kavitäten (14) zueinander parallel sind.

3. Anzuchtbehälter nach Anspruch 1,
**dadurch gekennzeichnet, dass** die Mittellängsachsen (A) der Kavitäten (14) sich in einer vom Boden (18) zur oberen Zugangsöffnung (16) verlaufenden Richtung voneinander entfernen.

4. Anzuchtbehälter nach einem der vorhergehenden Ansprüche,
**dadurch gekennzeichnet, dass** pro Kavität (14) drei Halterippen (20, 22, 24) aus der Umfangswand (12) vorstehen, die in Umfangsrichtung vorzugsweise gleichmäßig voneinander beabstandet sind.

5. Anzuchtbehälter nach einem der vorhergehenden Ansprüche,
**dadurch gekennzeichnet, dass** jede Halterippe (20, 22, 24) sich von der oberen Zugangsöffnung (16) bis zum Boden (18) erstreckt.

6. Anzuchtbehälter nach Anspruch 5,
**dadurch gekennzeichnet, dass** jede Halterippe (20, 22, 24) sich in einem Abschnitt (26; 26'), der sich an die obere Zugangsöffnung (16) anschließt, konisch nach innen abgeschrägt ist.

7. Anzuchtbehälter nach einem der vorhergehenden Ansprüche,
**dadurch gekennzeichnet, dass** der Boden (18) jeder Kavität (14) mehrere Absätze (32) aufweist, deren Oberseiten (34) auf dem gleichen Niveau angeordnet sind und zusammen eine Unterseite der Aufnahmeöffnung (30) festlegen.

8. Anzuchtbehälter nach Anspruch 7,
**dadurch gekennzeichnet, dass** zwischen den Absätzen (32) Kanäle (36) gebildet sind, die in einer Abflussöffnung (38) im Boden (18) münden.

9. Anzuchtbehälter nach Anspruch 8,
**dadurch gekennzeichnet, dass** alle Kanäle (36) eines Anzuchtbehälters (10) in einer gemeinsamen Abflussöffnung (38) münden.

10. Anzuchtbehälter nach einem der vorhergehenden Ansprüche,
**dadurch gekennzeichnet, dass** er drei, vier oder fünf Kavitäten (14) umfasst.

11. Anzuchtplatte (100), umfassend eine Mehrzahl von Anzuchtbehältern (10) nach einem der Ansprüche 1 bis 10.

12. Anzuchtplatte nach Anspruch 11,
**dadurch gekennzeichnet, dass**
- jeder Anzuchtbehälter (10) drei Kavitäten (14) umfasst, die zusammen in Draufsicht eine kleeblattartige Form bilden,
- die Anzuchtbehälter (10) in der Anzuchtplatte mit gleicher Ausrichtung in Zeilen (Z) angeordnet sind, und
- sich in Zeilenrichtung jeweils zwei Mittellängsachsen (A) der Kavitäten (14) eines Anzuchtbehälters (10) auf einer gemeinsamen Linie (L) befinden.

## Claims

1. Propagation container (10) comprising a circumferential wall (12), which bounds at least two cavities (14) arranged next to one another, each cavity having a center longitudinal axis (A) and the cavities being open to each other along part of the lateral circumferential surface thereof, wherein each cavity (14) has an upper access opening (16) and a bottom (18),
**characterized in that**
- between the upper access opening (16) and the bottom (18) of each cavity (14) run at least two retaining ribs (20, 22, 24) that extend substantially vertically and are spaced from each other in the circumferential direction, which retaining ribs protrude radially from the circumferential wall (12) into the associated cavity (14) and define a cylindrical or conical frustum-shaped accommodating opening (30) centered at the center longitudinal axis (A) of the associated cavity (14), and
- the mutual distance of the center longitudinal axes (A) is dimensioned in such a way that the lateral circumferential surfaces of the accommodating openings (30) touch or overlap.

2. Propagation container according to claim 1,
**characterized in that** the center longitudinal axes (A) of the cavities (14) are parallel to one another.

3. Propagation container according to claim 1,
**characterized in that** the center longitudinal axes (A) of the cavities (14) move apart from one another in a direction extending from the bottom (18) to the upper access opening (16).

4. Propagation container according to one of the preceding claims,
**characterized in that** three retaining ribs (20, 22, 24) per cavity (14) protrude from the circumferential wall (12), which retaining ribs are preferably uniformly spaced apart from one another in circumferential direction.

5. Propagation container according to one of the preceding claims,
**characterized in that** each retaining rib (20, 22, 24) extends from the upper access opening (16) to the bottom (18).

6. Propagation container according to claim 5,
**characterized in that** each retaining rib (20, 22, 24) is chamfered conically inwards in a portion (26; 26') that adjoins the upper access opening (16).

7. Propagation container according to one of the preceding claims,
**characterized in that** the bottom (18) of each cavity (14) has a plurality of shoulders (32), the upper sides (34) of which are disposed on the same level and together define an underside of the accommodating opening (30).

8. Propagation container according to claim 7,
**characterized in that** formed between the shoulders (32) are channels (36) that run into a drainage hole (38) in the bottom (18).

9. Propagation container according to claim 8,
**characterized in that** all of the channels (36) of a propagation container (10) run into a common drainage hole (38).

10. Propagation container according to one of the preceding claims,
**characterized in that** it comprises three, four or five cavities (14).

11. Propagation plate (100), comprising a plurality of propagation containers (10) according to one of claims 1 to 10.

12. Propagation plate according to claim 11,
**characterized in that**
- each propagation container (10) comprises three cavities (14), which together in plan view form a cloverleaf-like shape,
- the propagation containers (10) are disposed identically aligned in lines (Z) in the propagation plate, and
- in line direction in each case two center longitudinal axes (A) of the cavities (14) of a propagation container (10) are situated on a common line (L).

## Revendications

1. Conteneur de culture (10) doté d'une paroi périphérique (12) qui délimite au moins deux cavités (14) qui sont disposées l'une à côté de l'autre, possèdent chacune un axe longitudinal médian (A) et sont ouvertes l'une vers l'autre le long d'une partie de leur surface périphérique latérale, chaque cavité (14) présentant une ouverture supérieure d'accès (16) et un fond (18), **caractérisé en ce que**
- au moins deux nervures de maintien (20, 22, 24), qui s'étendent sensiblement verticalement et sont espacées l'une de l'autre dans la direction de la circonférence, s'étendent entre ladite ouverture supérieure d'accès (16) et le fond (18) de chaque cavité (14), font radialement saillie de ladite paroi périphérique (12) vers l'intérieur de la cavité correspondante et déterminent un ouverture de réception (30) de forme cylindrique ou tronconique qui est centrée sur l'axe longitudinal médian 8A) de la cavité (14) correspondante, et
- la distance réciproque entre lesdits axes longitudinaux médians (A) est dimensionnée de manière que les surfaces périphériques latérales desdites ouvertures de réception (30) se touchent ou se coupent.

2. Conteneur de culture selon la revendication 1,
**caractérisé en ce que** les axes longitudinaux médians (A) des cavités (14) sont parallèles les uns par rapport aux autres.

3. Conteneur de culture selon la revendication 1,
**caractérisé en ce que** les axes longitudinaux médians (A) des cavités (14) s'éloignent les uns des autres dans une direction allant du fond (18) vers l'ouverture supérieure d'accès (16).

4. Conteneur de culture selon l'une des revendications précédentes,
**caractérisé en ce que** trois nervures de maintien (20, 22, 24) par cavité (14), espacées préférentiellement uniformément les unes des autres dans la direction circonférentielle, font saillie de la paroi périphérique (12).

5. Conteneur de culture selon l'une des revendications précédentes,
**caractérisé en ce que** chaque nervure de maintien (20, 22, 24) s'étend depuis l'ouverture supérieure d'accès (16) jusqu'au fond (18).

6. Conteneur de culture selon la revendication 5,
**caractérisé en ce que** chaque nervure de maintien (20, 22, 24) présente une partie qui est reliée à l'ouverture supérieure d'accès (16) et qui est réalisée coupée en biseau évasé en cône vers l'intérieur.

7. Conteneur de culture selon l'une des revendications précédentes,
**caractérisé en ce que** le fond (18) de chaque cavité (14) présente plusieurs décrochements (32) dont les faces supérieures (34) sont disposées au même niveau et déterminent ensemble une face inférieure de l'ouverture de réception (30).

8. Conteneur de culture selon la revendication 7,
**caractérisé en ce que** des canaux (36) sont formés entre lesdits décrochements (32), lesquels canaux débouchent dans une ouverture d'écoulement (38) dans le fond (18).

9. Conteneur de culture selon la revendication 8,
**caractérisé en ce que** tous les canaux (36) d'un conteneur de culture (10) débouchent dans une ouverture d'écoulement commune (38).

10. Conteneur de culture selon l'une des revendications précédentes,
**caractérisé en ce que** ce conteneur comprend trois, quatre ou cinq cavités (14).

11. Plaque de culture (100) comprenant plusieurs conteneurs de culture (10) selon l'une des revendications 1 à 10.

12. Plaque de culture selon la revendication 11,
**caractérisée en ce que**
- chaque conteneur de culture (10) comprend trois cavités (14) qui, vues de dessus, ont la forme d'une feuille de trèfle,
- les conteneurs de culture (10) sont disposés suivant la même orientation, en lignes (Z), dans la plaque de culture, et
- deux axes longitudinaux médians (A) des cavités (14) d'un conteneur de culture (10) se trouvent à chaque fois sur une ligne commune (L), dans la direction des lignes.
